Europäisches Patentamt

European Patent Office

Office européen des brevets

(19)

(11) Publication number: **0 123 038**
**B1**

(12) **EUROPEAN PATENT SPECIFICATION**

(45) Date of publication of patent specification: **26.08.87**

(51) Int. Cl.⁴: **G 02 B 26/10**

(21) Application number: **84101585.2**

(22) Date of filing: **16.02.84**

(54) **Optical scanner.**

(30) Priority: **28.02.83 US 470499**

(43) Date of publication of application:
**31.10.84 Bulletin 84/44**

(45) Publication of the grant of the patent:
**26.08.87 Bulletin 87/35**

(84) Designated Contracting States:
**CH DE FR IT LI NL SE**

(56) References cited:
**AU-B- 516 790**
**DE-A-2 219 954**

(73) Proprietor: **KOLLMORGEN TECHNOLOGIES
CORPORATION
66 Gatehouse Road
Stamford Connecticut 06902 (US)**

(72) Inventor: **Taylor, William H.
Plain Road
South Deerfield, Mass. 01373 (US)**

(74) Representative: **Königseder, geb. Egerer,
Claudia
Zugspitzstrasse 65
D-8104 Grainau (DE)**

Courier Press, Leamington Spa, England.

## Description

This invention relates to optical scanners, and more particularly, to compact optical scanners capable of scanning a field of view at high scanning rates suitable for forming a video display.

Optical scanning systems find use in a variety of applications such as thermal imaging systems known as FLIRs (Forward Looking Infra Red systems). In such systems thermal radiation, for example, in the infrared range, is typically collected by a lens and the image is raster scanned in the vertical and horizontal directions. The radiation from each picture element in succession is focussed onto a radiation detector which provides an electrical signal according to the detected radiation intensity. The electric signal from the detector can then be used to create a television-like video display corresponding to the original thermal image.

Although the invention herein will be described principally in connection with thermal imaging systems, it is not limited thereto. In particular, it should be noted that the invention is also operable with respect to other types of radiation such as light in the visible spectrum. Furthermore, although the principal description of the system will be in the "read" mode, the system is also capable of operating in the reverse direction to paint or "write" an image starting from a variable intensity control signal.

In the past, optical scanning has been achieved in a variety of different ways usually employing moving mirrors to provide the horizontal and vertical scanning. In its simplest form, two separate oscillating mirrors are employed, one rotating about an axis so as to provide the horizontal scan and the other rotating about an axis so as to provide a vertical scan. The oscillating motions of the mirrors rotate the mirror in one direction to provide the scan followed by a rapid "flyback" rotation to position the mirror at the beginning of the next scan. The oscillating motion of the high speed horizontal scanning mirror imposes severe limitations on the operable scanning speed with this arrangement. This approach also suffers from scanning distortions of the image and electronic signal processing difficulties.

A common approach utilized to improve the scanning speed is to replace the high speed horizontal oscillating mirror with a multi-faceted rotating polygonal mirror. With this arrangement successive facets of the polygonal mirror sweep the image to provide the horizontal scans. The facets can either be on the outside of a solid polygon (see, e.g., US patents 4,210,810, 4,180,307 and 4,156,142) or on the inside of a cylinder (see, e.g., US patent 3,604,932). Since the high speed horizontal scanning mirror motion is rotary rather than oscillating, higher scanning rates are possible. However, in order to operate such polygonal mirrored systems at television raster scanning rates (15.750 Hertz or 63,5 μsec. per line) the rotating speed for the polygonal mirror is typically in the range of 40 000 to 80 000 rpm. Such high operating speeds result in critical motor design problems, particularly in handling the high frequency motor energizing signals, in precisely balancing the rotating apparatus, and in achieving reasonable bearing life. Normally, in such high speed systems the rotating polygon mirror structure must be placed in an evacuated chamber to reduce air resistance, hence, adding considerably to the cost and operating difficulties of the system.

The number of facets in a polygon mirrored system is determined, generally, by the desired scanning rate and the available motor speed. The mirror surfaces must be large enough to accommodate the optical pupil diameter at the entrance to the system and, hence, the mirror structure cannot be arbitrarily small. The mirror surface is preferably large enough to avoid serious vignetting whereby part of the incoming image misses the mirror at positions toward the ends of the horizontal scan lines. In a system designated to achieve quality imaging the rotating mirror structure is of a considerable size imposing considerable load on the drive motor system.

Another problem encountered with polygon mirrored systems is their poor scanning efficiency. In a scanning system it is desired to devote maximum time to scanning the image with a minimum amount of lost time between successive scans. In a polygon mirrored system the scanning efficiency is relatively low, for example, in the order of 25% for a six sided polygon scanning a 30 degree field of view.

A further problem with polygon mirrored systems arises when used in combination with telescopes. Normally, there is insufficient distance between the telescope pupil at the entrance to the system and the first element of the imaging lens in which to accommodate the horizontal and vertical scanning mirrors. In order to increase the available space for the mirrors it becomes necessary to add relay or transfer optics to the system. These undesirably add size, weight and cost to the system.

Although rotating polygon mirrored systems as discussed above are the most common of the prior optical scanning systems, two further approaches should be mentioned.

One such approach utilizes a star shaped mirror wheel which is shaped like a gear wheel whereon the scanning mirrors are located on the sides of the gear teeth. For example, see the IR Handbook, by ONR Department of Navy, Library of Congress No. 77—90786, pages 10—23. This approach tends to reduce the required rotating speed for scanning horizontal traces and eliminates some of the optical problems but, on the other hand, suffers from degrading imagery due to focus shifts inherent in the operation and due to difficulties in maintaining the required surface tolerances for the star wheel configuration.

The other known approach is to use a linear array of detectors capable of sensing radiation intensity along the entire horizontal trace thereby eliminating the need for one of the scanning mirrors. The horizontal detector arrays, however, are too expensive for most applications and usually result in undesirable configurations for the scanner unit.

In a typical scanning system according to the invention a scene is scanned in an orthogonal pattern including linear scanning traces in one of the orthogonal directions, characterized in that the system comprises a rotating scanning disc including a circular array of concave reflectors on a plane surface thereof; a strip mirror, an imaging means producing the linear scanning trace on said strip mirror, said linear scanning trace being separated from said concave reflectors by a distance equal to the focal length of said concave reflectors; and radiation detecting means positioned to detect the intensity of radiation reflected by said concave reflectors. The high speed horizontal scanning is achieved using a circular array of concave reflectors on a rotating scanning disc which operates in conjunction with a strip mirror. The horizontal trace being scanned appears on the strip mirror.

The strip mirror is separated from the concave reflectors by a distance corresponding to the reflector focal length. As the scanning disc rotates, successive concave reflectors scan the strip mirror image and thereby scan successive horizontal traces. The radiation from the reflectors is focussed onto a suitable detector which then provides an electrical signal corresponding to the detected radiation intensity. In a preferred embodiment the radiation emerging from the concave reflectors is in the form of a collimated beam which is focussed onto the detector by a collection lens. The high speed horizontal scanning according to the invention is conveniently combined with a vertical scanning arrangement such as can be achieved using a moving framing mirror to provide a complete scanning system.

Since the disc scanning system according to the invention differs considerably in concept with respect to prior polygon scanners, it is difficult to make a direct comparison. In general, however, the motor speed required for the high speed horizontal scanning can normally be reduced by a factor of four, i.e., from a typical speed of 40 000 rpm to a speed of 10 000 rpm. Scanning efficiency is increased from a typical value of 25% for polygon scanners to substantially 100% with the disc scanner. The weight of the rotating disc being used according to the invention can be in the order of 1/10 the weight of the rotating polygon. The required size of the framing mirror for the vertical scanning and the required size for the telescope associated with the system are both smaller than would be required for a comparable system using polygon scanning. Furthermore, high speed polygon scanning systems normally require that the polygon be located in an evacuated chamber to reduce windage losses whereas with the inventive system there are no significant windage problems due to the disc design and the lower rotation speed required.

The scanning system according to the invention can be used to "read" or "write" and, furthermore, can do both simultaneously using the same framing mirror and array of concave reflectors. Simultaneous read/write systems are useful for image intensification such as utilized in night scopes or to achieve radiation transformations such as required for converting infrared imaging into a visible light display. The manner in which the invention is achieved can be better understood with reference to the drawings.

Fig. 1 is a perspective view of the scanning apparatus showing the optical paths during scanning;

Figs. 2A and 2B are elevation and plan views, respectively, of the apparatus of Fig. 1;

Figs. 3 and 4 are cross-sectional views illustrating two different strip mirror constructions;

Fig. 5 is a perspective illustration of an embodiment including a curved strip mirror;

Fig. 5A is a view of a multiple detector array for use in the invention;

Figs. 6A and 6B are cross-sectional elevation and end views illustrating an in-line scanner arrangement according to the invention;

Fig. 6C is a block diagram illustrating the in-line scanner coupled to a telescope and detector; and

Figs. 7 and 8 are elevation and side views illustrating an embodiment wherein the scanner operates simultaneously in the "read" and "write" modes.

Fig. 9 is a perspective view of a strip mirror design preferred for use with thermal radiation.

Figs. 10 and 11 show the use of a mirror optical surface as the imaging "lens".

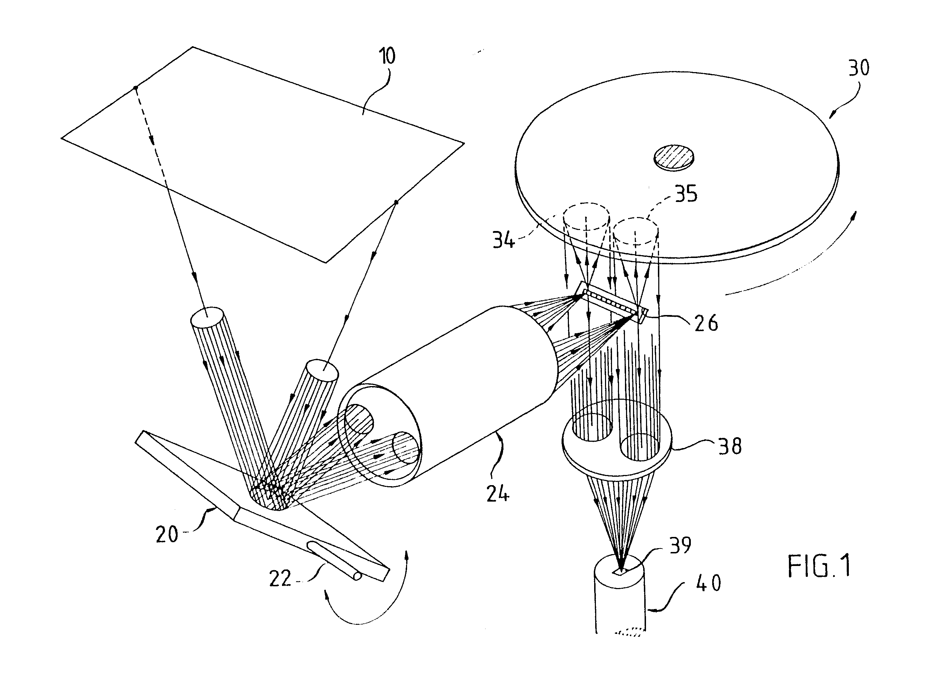

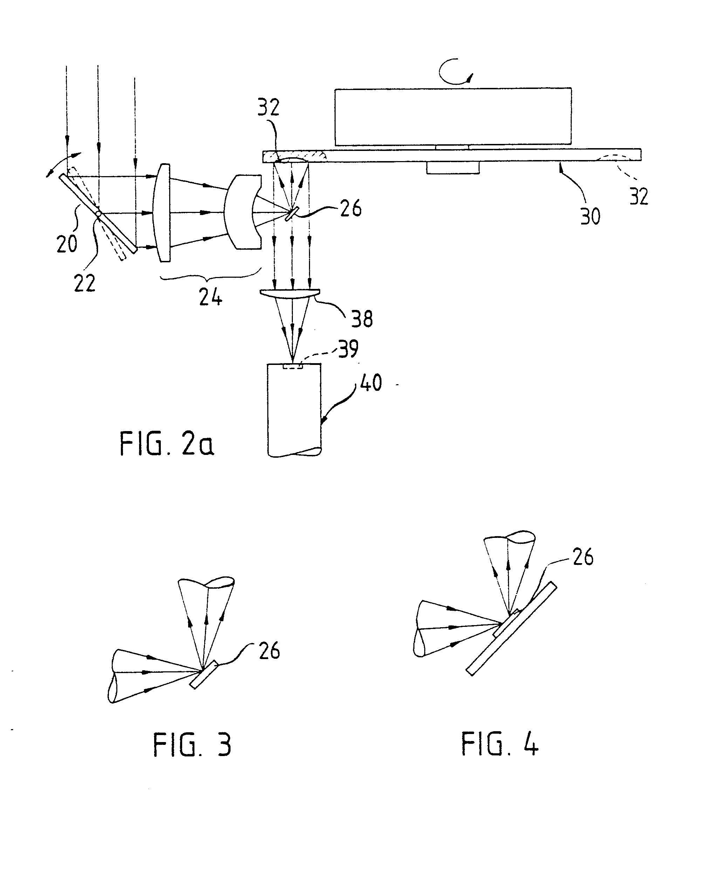

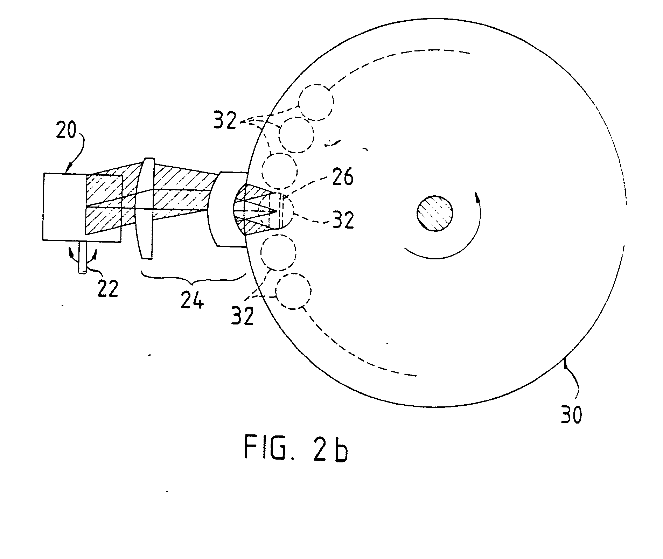

The basic system according to the invention is illustrated in Figs. 1, 2A and 2B. Scene 10 is scanned vertically by an oscillating low speed framing mirror 20 and is scanned horizontally by moving concave reflectors on a high speed rotating scanning disc 30. The scanned radiation from scene 10 is focussed on a detector 40 which provides an electrical signal corresponding to the intensity of the detected radiation. The system thus scans the scene and provides an electrical signal suitable for controlling beam intensity in a television like video display.

Framing mirror 20 is a planar polished mirror mounted for rotation about an axis 22 as shown in Fig. 1. Initially, the framing mirror 20 reflects light or radiation from the top of scene 10 and then, as the mirror 20 rotates, moves down the scene to reflect light from increasingly lower positions of scene 10. When the bottom of scene 10 is reached, the mirror 20 is returned to the initial position at the top as quickly as possible. The movement of the framing mirror 20 is in the nature of a repetitive saw tooth vertical scan, i.e., moving gradually from top to bottom followed by a short "flyback" interval. A variety of known techniques can be utilized for achieving the desired oscillatory motion of the mirror as, for example, a galvanometer type action wherein the mirror is moved by an electromagnetic attraction against a spring return pull. The repetition rate for the mirror movement is in accordance with the desired vertical scanning rate of the system. A repetition rate of sixty scans per second would be typical for an interlaced raster scan at standard television rates.

Radiation from framing mirror 20 passes through an imaging lens 24 which focusses the radiation onto a thin strip mirror 26. The imaging lens 24 is telecentric, i.e., different pencils of rays emerging from the lens are susbtantially parallel regardless of location. Furthermore, the lens must have an entrance pupil in front

3

of the lens at the location of the framing mirror 20 and must focus the radiation onto strip mirror 26 located beyond the lens.

Strip mirror 26 is stationary and is slanted to reflect radiation toward the concave reflectors 32 (Fig. 2B) of scanning disc 30. The strip mirror 26 includes a polished thin strip reflective surface which can be achieved using a polished reflective bar or taut ribbon as illustrated in Fig. 3 or by vacuum depositing a reflective metallic strip onto a transparent substrate as shown in Fig. 4. The width (the small dimension) of the ribbon determines the width of the area scanned during a horizontal trace and should be selected accordingly. A typical width for the strip mirror 26 would be about 0,5 mm.

Scanning disc 30 is constructed including a circular array of concave reflectors 32 (Fig. 2B) formed as indentations into one side of the disc. The concave reflectors 32 are located at a common radius of the disc 30 in line with the strip mirror 26 as shown in Fig. 2A. Radiation is reflected upwardly from strip mirror 26 onto one of the concave reflectors 32 shown, e.g., in position 35 (Fig. 1) and then downwardly past the strip mirror 26 in a collimated beam. The concave reflectors 32 are preferably formed using a single point diamond turning techique known in the optical manufacturing industry. In low cost systems, however, the disc 30 including the concave reflectors 32 can be formed by stamping or molding. The concave reflectors are dimensioned to have a focal length corresponding to the distance between scanning disc 30 and strip mirror 26. The ideal concave configuration is parabolic, although a spherical configuration may be preferred under certain conditions.

The collimated beam emerging from the concave reflectors 32 passes through a collector lens 38 which focusses the beam onto detector 40 through a field stop opening 39. The aperture of the collector lens 38 must be sufficiently large to accommodate the radiation beams from the scanning disc 30 at all operable reflector positions. The lens is designed to focus all such radiation beams through stop 39 onto the radiation detector 40. The lens should be substantially free of aberrations.

The type of detector used depends on the type of radiation being detected and may, for example, be a photoelectric detector if the system operates in the visible spectrum or an infrared detector if the system operates in the thermal radiation spectrum. If the system operates in the infrared range, the detector is preferably cooled by means of a Dewar flask to reduce ambient thermal noise. Ultraviolet detectors can also be used. Furthermore, the system can be multispectral wherein detectors of different types can be used to simultaneously detect different types of radiation.

The illustration in Fig. 1 shows the beam path for two different positions 34 and 35 of concave reflector 32. Framing mirror 20 is shown in a position corresponding to the vertical center of the scene 10 being scanned and hence, rotation of disc 30 provides a horizontal scan across the center of the scene 10. When a reflector is in position 34 toward the left, the radiation from the left hand side of scene 10 is reflected off framing mirror 20 through imaging lens 24 to the left end of strip mirror 26 as shown in Fig. 1. The radiation is then reflected upwardly by strip mirror 26 to the concave reflector 32 at position 34 and then downwardly in a collimated beam past strip mirror 26, through collector lens 38 to detector 40.

As disc 30 rotates in the counterclockwise direction, as indicated by the arrow in Fig. 1, the concave reflector 32 moves toward the right and picks up radiation from points increasingly toward the right of the strip mirror 26. Eventually, rotation of disc 30 brings the concave reflector 32 to position 35 corresponding to the right side of scene 10 and the right side end of strip mirror 26. In this manner, a horizontal scan of the scene 10 from left to right is achieved while one of the concave reflectors 32 moves from position 34 to position 35. Repetitive horizontal scans achieved by movement of the concave reflectors in combination with the movement of the framing mirror provides a raster type scan of the entire scene.

The number of reflectors, the disc diameter and the speed of rotation are parameters which are selected in accordance with the desired horizontal scanning speed. Horizontal scanning at standard television rates (assuming two interlaced fields per frame and two rows of detectors) can be achieved using twenty-four reflectors located on a diameter of 72 mm rotating at 19 700 rpm.

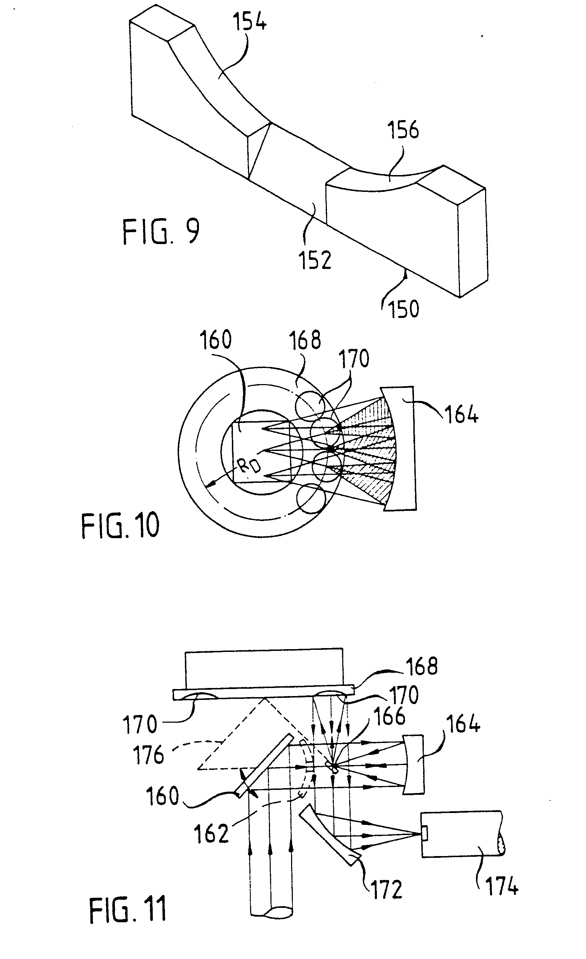

With the flat strip mirrors as shown in Figs. 3 and 4 there is usually some stray radiation picked up by the concave reflectors as they move into position at the end of the mirror or as they leave the mirror. In a thermal radiation system this problem can be eliminated by using a strip mirror arrangement of the type shown in Fig. 9. A support structure 150 is shaped to provide a flat inclined surface 152 which provides the strip mirror. Outwardly of the strip mirror are curved reflective surfaces 154 and 156. The curved surfaces are so shaped that when the concave reflectors are at positions either side of the strip mirror the detector will see a portion of the cooled Dewar of the detector structure rather than the interior of the scanner. The cooled surface, normally at 77° Kelvin, emits very little thermal radiation and, hence, very little stray radiation is picked up. Surfaces 152, 154 and 156 of the mirror support are polished and receive a reflective coating.

The fact that the concave reflectors follow an arcuate path while scanning the linear strip mirror results in some scan distortion since the reflectors cannot be focussed on the exact center of the strip mirror from end to end. If the reflectors are aligned for correct focus at the center of the strip mirror, they will be focussed somewhat off center at the ends of the strip mirror thereby resulting in scan distortion due to curvature in the scan. Normally, the distortion from this source is in the order of 5% or less and can be tolerated without correction. In systems used for object recognition or sighting, the effects due to scan distortion would hardly be noticed.

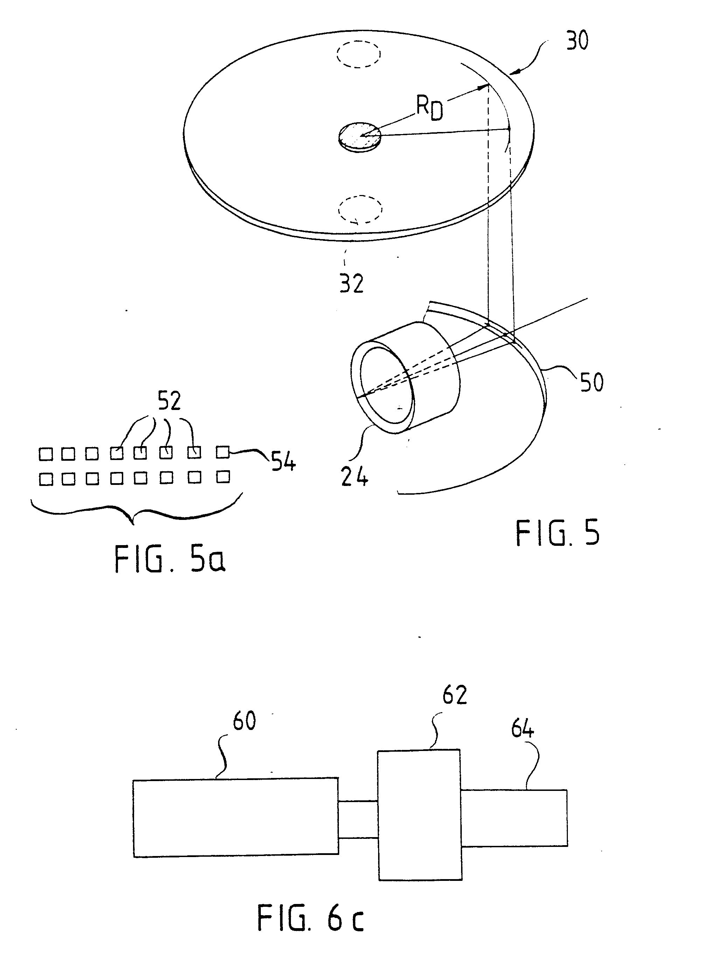

In precision scanning systems where distortion must be minimized, the scan distortion can be

4

eliminated by using a curved strip mirror 50 as illustrated in Fig. 5. In this embodiment the imaging lens 24 forms its image on a spherical surface of radius equal to the line scan disc radius $R_D$. The exit pupil distance of the imaging lens 24 is equal to the line scan disc radius $R_D$ and is located on the lens side of the image plane. Strip mirror 50 is a segment of a cone rather than a plane so that the mirror has a radius of curvature which is also equal to the line scan radius $R_D$ and has a reflecting surface slanted, typically at 45 degrees. With this arrangement the radiation passing through the imaging lens 24 is reflected upwardly to the concave reflectors 32 of scanning disc 30 and the reflectors 32 maintain the centered alignment relative to the strip mirror 50 throughout the entire transverse.

Scan distortion can also be compensated for in the electronic processing of the scanner output signal. Since the scan distortion is a function of position during the horizontal scan, compensation can be provided by suitable digital or analog techniques synchronized to the horizontal scan interval.

The imaging lens can be of the catadioptric type, that is, it can comprise both lenses and mirrors with convex or concave surfaces. Furthermore, as shown in Figs. 10 and 11, it can simply consist of a mirror if the F/number imaging components is large enough to permit satisfactory image quality.

As can best be seen in Fig. 11, with this embodiment incoming radiation is reflected off a framing mirror 160, through a meniscus lens 162, past a strip mirror 166 to an imaging reflector "lens" 164. The radiation is then focussed on strip mirror 166 and reflected toward the concave reflectors 170 of rotating disc 168 from which it emerges as a collimated beam. The collimated beam passes the strip mirror 166 and is focussed on the detector of a detector/Dewar unit 174 by means of a collector reflector 172. Strip mirror 166 is generally of the type previously described in Fig. 5, i.e., the mirror is a section of a conical surface. In this case, the curved strip mirror is the exterior surface of a cone formed with a 45 degree half-angle and an axis which is coaxial with the axis of rotation for disc 168 as indicated by dotted lines 176. In this application, the conical strip mirror not only eliminates scan distortion, but also causes the pencils of rays emerging from mirror optics imaging reflector "lens" 164 to be directed accurately onto the disc reflectors to thereby satisfy telecentric conditions. Imaging mirror 164 is a concave mirror with a spherical contour with a radius equal to the distance from the vertex of framing mirror 160. With this configuration the on-axis and off-axis bundles of light are reflected from the framing mirror and imaged in the same manner.

The reflected image of mirror 164 lies on a spherical surface which is intercepted by curved strip mirror 166. The radius of curvature of the image is one-half the radius of curvature of imaging mirror 164 and is equal to the scanning disc radius $R_D$ (Fig. 10).

The advantage of this configuration is that off-axis and chromatic aberrations are virtually non-existent. Only spherical aberrations of an on-axis type exist which are uniformly and identically present for all off-axis field points. No corrections for these aberrations need be made if the F/number of the image forming pencil of rays is large enough, or if the radiation wavelength is long enough, or if resolution requirements are not demanding. Where correction is required this can easily be achieved by use of a meniscus lens 162 of concentric design with centers of curvature at the entrance pupil (vertex of framing mirror 160). Lens systems of this type are known as Bouwers-Maksutov Systems and are described by Kingslake in "Lens Design Fundamentals", Academic Press, 1978, pages 311—313. Lens 162 can be either in back of the entrance pupil (as shown in Fig. 11) or in front of the entrance pupil. One advantage in having the lens in front of the entrance pupil is that it can then also serve as a protective window at the entrance.

In the foregoing description, detector 40 (Figs. 1 and 2A) has been referred to as a single point detector. In some cases, however, multiple detector arrays such as shown in Fig. 5A offer several advantages. A linear array 52 of detector elements aligned in the direction of the horizontal scan, will see the picture elements in serial fashion. If suitable time delays are introduced, the separate radiation measurements can be combined to thereby achieve a significant improvement in the signal to noise ratio. The signal to noise improvement from the time-delay and integration process is proportional to the square root of the number of detector elements in the linear array.

Multiple detectors in separate rows 54 permit parallel scanning of several different horizontal traces at the same time during a single pass of a concave reflector across the strip mirror. Two such detectors can be used to conveniently provide two interlaced fields for a raster scan frame.

With a single detector, the entire optics of the scanner is operated "on-axis" for all scan positions. Multiple detector array cannot operate entirely "on-axis" and, therefore, are more affected by lens aberrations. However, there can be in the order of eight detector elements in a horizontal array and in the order of eight rows of elements without seriously degrading image performance.

One advantage of the system according to the invention is that the radiation between the concave reflectors and the collection lens or mirror just prior to the detector is in the form of a collimated beam and, therefore, the optics in this portion of the system can be folded without any significant deterioration in optical performance. By folding the optics, the scanner can be made more compact and can be arranged to achieve the desired overall configurations.

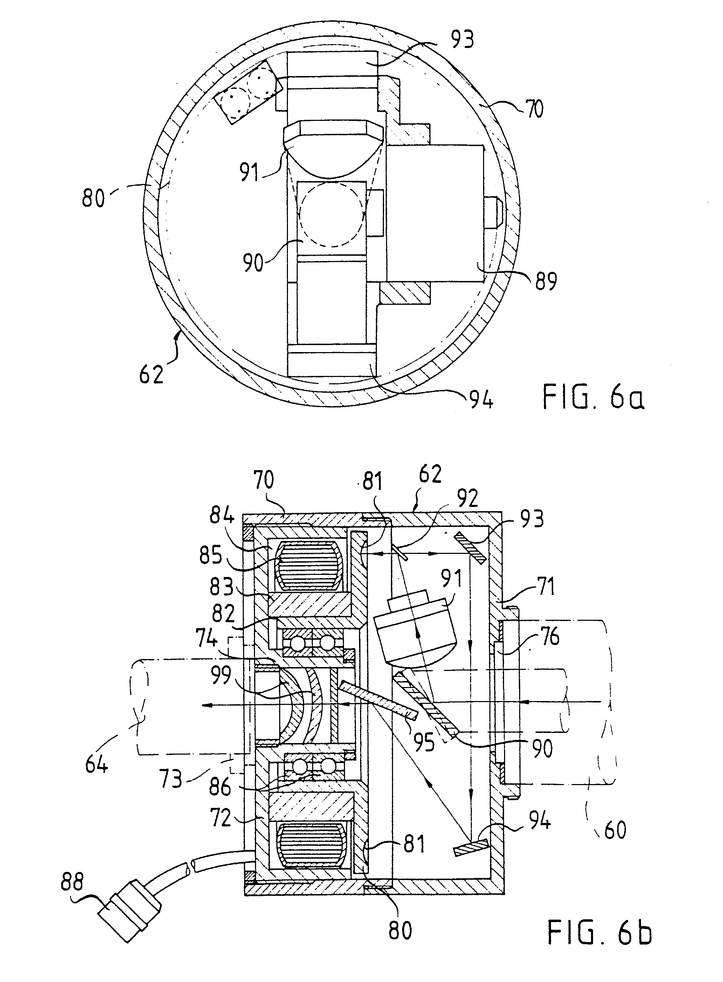

A preferred embodiment of the invention is illustrated in Figures 6A to 6C wherein an in-line scanner 62 is shown having an axial alignment with a telescope 60 and an infrared detector/Dewar 64.

The scanner, best seen in Figs. 6A and 6B, fits into a cylindrical housing 70 including a threaded telescope mounting flange 71 on one side. A germanium window 76 provides an aperture through the center of the flange 71 suitable for optically coupling the telescope 60 to the scanner 62. An externally threaded base 72 fits into the open side of housing 70 and includes an inwardly projecting boss 74 having a central opening therein suitable for coupling the scanning optics to detector 64. The detector 64 is mounted by means of a suitable flange 73. Flanges 71 and 73, and the openings through the flanges, are such that the telescope 60, scanner 62 and detector 64 are all axially aligned.

The scanning disc 80 includes a circular array of concave reflectors 81 and is integral with a cylindrical shaft 82. Shaft 82 is journaled for rotation about boss 74, by means of a duplex pair of ball bearings 86. The scanning disc 80 is driven by a hysteresis synchronous motor built into the housing 70. The motor includes a stator structure 84 with windings 85 and a permanent magnet rotor structure 83 mounted surrounding cylindrical drive shaft 82. The motor can include a three phase stator winding energized from an external control system via connector 88. Speed sensing signals for controlling motor speed are also brought out via connector 88 and can be derived either from Hall detectors in the motor or from photoelectric sensors operating off the scanning disc 80. Any suitable speed control system can be employed such as a phase lock loop comparing the speed sensing signals to a reference clock. Signals required for synchronizing external video systems may also be derived from the scanning disc 80 through photoelectric detectors, and these signals also would be brought out via connector 88.

Framing mirror 90 is located at the exit pupil of telescope 60. The framing mirror 90 is driven by a galvanometer type drive unit 89 (Fig. 6A) which rotates the mirror through about eleven degrees in going from the top to the bottom of the scene being scanned. Suitable drive systems for the framing mirror are available commercially from General Scanning, Inc. The framing mirror 90 is moved in accordance with a saw tooth waveform at a 60 Hertz rate and with a "flyback" time of less than 0,115 seconds so as to be compatible with EIA RS—170 video format. The mirror is preferably made of beryllium or other light weight, strong material. Suitable dimensions of the mirror are 25,4 mm by 13,5 mm and 1,3 mm thick.

Imaging lens unit 91 is telecentric and is located as closely as possible to framing mirror 90 and strip mirror 92. The entrance pupil for the imaging lens is located at the center of framing mirror 90 whereas the exit pupil is essentially at infinity to provide the telecentric conditions. A two element lens constructed of germanium is employed with two aspherics. The strip mirror 92 is in the form shown in Fig. 9 including a reflective mirror portion in the center slanted to reflect radiation toward the scanning disc 80. The nominal dimensions for the strip mirror flat reflective surface are 0,5 by 6,4 mm.

Scanning disc 80 includes twenty-four concave reflectors 81 each 6,4 mm in diameter. The reflectors 81 have a paraboloidal surface contour and a speed of about F/1,0. The speed of rotation depends on the detector system being used and, in particular, the number of horizontal traces which are scanned simultaneously. With two detector rows, the motor speed is about 20 000 rpm, whereas with eight rows of detectors the motor speed is reduced to about 5 000 rpm. The distance between reflector centers is 7,4 mm and a distance of 1 mm is left between reflectors to provide a horizontal blanking interval and to provide comfortable machine tolerances.

The optical path is shown in Fig. 6B by the arrows going from telescope 60 toward the detector 64. Radiation coming from telescope 60 is reflected off framing mirror 90, passes through imaging lens 91, and is then reflected off strip mirror 92 toward the array of concave reflectors 81. The radiation emerging from the reflectors 81 is in the form of a collimated beam which is folded in a manner which brings the beam back to the original axis of the telescope 60 so as to emerge through the center of the motor via a collection lens 99. Mirrors 93 to 95 are suitably mounted in the housing 70 as shown to achieve the desired path. The collection lens 99 includes two germanium elements with all surfaces being spherical.

In order to maximize the optical transmission within the scanner, all germanium elements are preferably included with a high efficiency dielectric anti-reflection coating, and all reflective surfaces are coated with a gold or multilayer dielectric coating which yields ninetynine percent or greater reflectance in the region of the spectrum for which the scanner is designed.

The optical system design parameters for the preferred embodiment illustrated in Figures 6A—6C are as follows:

**0 123 038**

### System Data

| | |
|---|---|
| Field of View | 28,0° |
| Equivalent Focal Length | 25,4 mm |
| Entrance Pupil Diameter | 12,7 mm |
| F/Number | 2,0 |
| Transmission | 70% |
| Scan Distortion | 3,5% |

### Imaging Lens Data

| | |
|---|---|
| Field of View | 28,0° |
| Equivalent Focal Length | 12,7 mm |
| Entrance Pupil Diameter | 12,7 mm |
| F/Number | 1,0 |
| Image Size | 6,4 × 4,8 mm |

### Scan Disc Reflector Data

| | |
|---|---|
| Field of View | 2,5° |
| Entrance Pupil Diameter | 6,4 mm |
| Radius of Curvature | 12,7 mm |
| Focal Length | 6,4 mm |
| Aperture | 6,4 mm |
| F/Number | 1,0 |
| Image Size | 0,25 × 0,25 mm |

### Collection Lens Data

| | |
|---|---|
| Field of View | 2,5° |
| Entrance Pupil Diameter | 6,4 mm |
| Aperture | 12,7 × 6,4 mm |
| Focal Length | 12,7 mm |
| F/Number | 2,0 |
| Image Size | 0,5 × 0,5 mm |

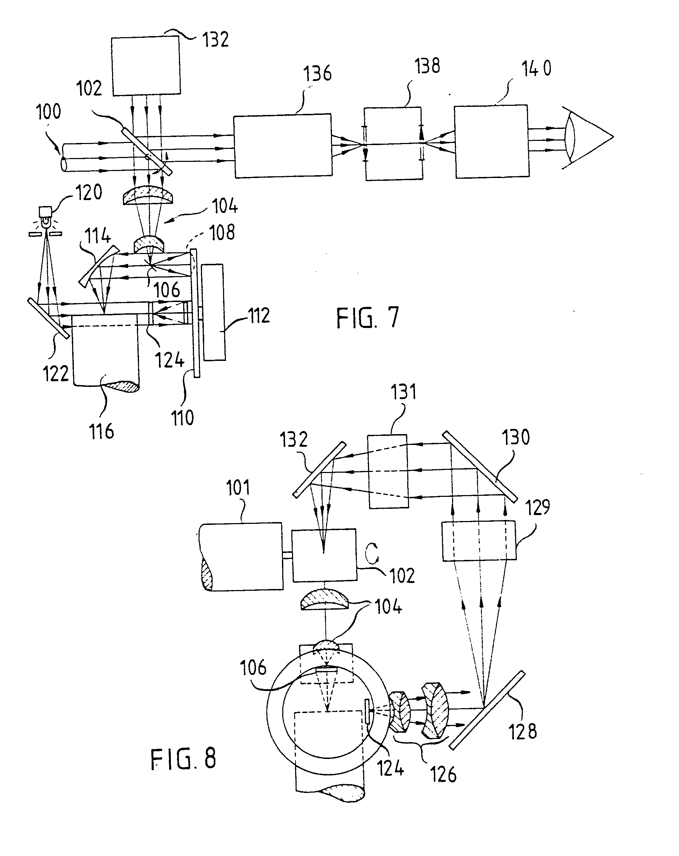

Fig. 7 and Fig. 8 illustrate another embodiment of the invention including both "read" and "write" modes. This system scans an infrared scene using an infrared detector. The emerging electrical signal is amplified and then used to control a visible light source such as a light emitting diode (LED). Visible light is then passed through the scanning system to construct a corresponding visible video image. The same

7

framing mirror and array of concave reflectors are used in both "read" and "write" modes to minimize components in the system and to maintain exact synchronism between the two operating modes.

Incoming infrared radiation 100 is reflected off framing mirror 102 and passes through imaging lens system 104 to form a linear trace on strip mirror 106. The strip mirror 106 reflects the infrared radiation toward the concave reflectors 108 on scanning disc 110. Radiation emerges from the reflectors 108 as a collimated beam which travels past the strip mirror 106 to an off-axis parabolic collection reflector 114 which focusses the collimated beam on an infrared detector in a Dewar flask 116.

The framing mirror 102 is driven by a galvanometric drive unit 101 (Fig. 8) which provides the vertical scan and scanning disc 100 is driven by a motor 112 to provide the horizontal scan. The system thus far described operates essentially the same as that previously described in connection with Figures 1 to 4.

The signal from the infrared detector 116 is amplified (by means of an amplifier not shown) and then used to control intensity of a visible light source such as a light emitting diode (LED) 120. The visible light passes through the scanner in the reverse direction to paint or "write" the same scene in visible light. Light from LED 120 passes through a pinhole to a collection reflector 122 which forms a collimated beam directed toward the circular array of reflectors on disc 110. As shown in the Figure, the beam is directed toward a different portion of the disc than that being used for the infrared scanning, e.g., a portion displaced therefrom by ninety degrees.

The light beam is focussed onto a strip mirror 124 (Fig. 8) which, in turn, reflects the light into a collimating lens 126. The collimated beam is reflected off mirrors 128 to 132 in succession to the reverse side of framing mirror 102.

The light is then reflected off the reverse side of the framing mirror 102 and passes through an objective lens 136 (Fig. 7) to create a visible light image on an image screen 138 which is preferably of the image intensifier type if a low energy level LED is used as the light source. Alternatively, light source 120 could be a high inensity laser in which case image intensification would normally not be required. The image can be viewed through an eyepiece 140.

Preferably, the optics in forming the image reverses the image top to bottom so it appears with the same orientation as the original scene.

With this arrangement the scanning system according to the invention is used to scan an infrared scene and to reconstruct the scene in a visible light image, thereby providing image amplification as well as shifting of the spectrum from infrared to visible light.

**Claims**

1. A scanning system wherein a scene is scanned in an orthogonal pattern including linear scanning traces in one of the orthogonal directions, characterized in that it comprises a rotating disk (30) including a circular array of concave reflectors (32) on a plane surface thereof; a strip mirror (26), an imaging means (24) producing the linear scanning trace on said strip mirror, said linear scanning trace being separated from said concave reflectors (32) by a distance equal to the focal length of said concave reflectors (32); and radiation detecting means (40) positioned to detect the inensity of radiation reflected by said concave reflectors (32).

2. The system of claim 1, wherein a means (38) is provided for focusing said collimated beam on said detected means (40).

3. The system of claim 2, wherein said means for focusing is a collector lens (38) or a parabolic reflector (114).

4. The system of claim 1, wherein said concave reflectors (32) are parabolic or spherical.

5. The system of claim 1, wherein said radiation detecting means (40) includes multiple detectors (52) located to successively detect radiation from the same point of the scene being scanned.

6. The system of claim 1, wherein said radiation detecting means (40) includes a plurality of detectors located in rows (54) for simultaneously detecting radiation from different linear traces of the scene being scanned.

7. The system of claim 1, wherein said radiation detecting means (40) is selected from detectors for visible light, infrared and ultraviolet radiation.

8. The system of claim 1, wherein said radiation detecting means (40) includes a plurality of detectors each capable of detecting radiation in a different spectral region.

9. The system of claims 1 to 8, further comprising a framing mirror (20) for providing a low speed vertical scan of the scene.

10. The system of claim 9, wherein said imaging means (24) is a telecentric system and located between said framing mirror (20) and said strip mirror (26) so that a linear trace of said scene appears on said strip mirror (26) in accordance with the position of the framing mirror (20).

11. The system of claim 10, wherein said telecentric imaging means is a lens (91) or a concave mirror (164).

12. The system of claim 11, further comprising a concentric meniscus lens (162) prior to said concave imaging mirror.

13. The system of claims 1 to 12, wherein said strip mirror is a section of a conical surface (50), or a ribbon of reflecting material (26), or a reflective strip (26) on a transparent substrate.

14. The system of claim 9, further comprising at least one reflective surface (93) between said array of concave reflectors (81) and said focusing means (99) to fold the optical path.

15. The system of claim 14, wherein the optical path toward said framing mirror is in line with the path to said radiation detecting means.

16. The system of claim 9, wherein said detecting means is mounted on a cooled surface (174), and further including curved surfaces (154, 156) adjacent said strip mirror (152) so that said detecting means (39) views said cooled surface (174) in regions outside the scan via said strip mirror (152).

17. A raster scanning system for providing a video type image including parallel linear scan imaging elements, characterized in that it comprises a rotating scanning disc (110) including a circular array of concave reflectors (108) on a plane surface thereof; a strip mirror (124) separated from said concave reflectors (108) by a distance equal to the focal length of said concave reflectors (108), imaging means (126, 129, 131) for imaging said strip mirror (124) onto an image plane; and radiation emitting means (120) positioned to emit radiation at a controlled intensity toward said array of concave reflectors (108) to form a linear scanning image.

18. The system of claim 17, further comprising means (122) for forming radiation from said radiation emitting means (120) into a collimated beam directed toward said array of concave reflectors (108).

**Patentansprüche**

1. Vorrichtung zum orthogonalen Abtasten von Bildern mit linearen Abtastspuren in einer der othogonalen Richtungen, dadurch gekennzeichnet, daß diese eine rotierende Scheibe (30) aufweist, die auf ihrer ebenen Oberfläche in kreisförmiger Anordnung mit einer Anzahl von Konkav-Reflektoren (32) versehen ist; und daß die Vorrichtung weiterhin einen Bandspiegel (26) und ein optisches Abbildungssystem (24) aufweist, das auf dem Bandspiegel (26) eine lineare Spur abbildet und von den Konkav-Reflektoren (32) in einer Entfernung einer Brennweite der genannten Konkav-Reflektoren (32) angeordnet ist; und daß die Vorrichtung weiterhin eine Detektoreinrichtung (40) aufweist, die so angeordnet ist, daß sie die von den Konkav-Reflektoren (32) reflektierte Strahlung erfaßt.

2. Vorrichtung nach Anspruch 1, dadurch gekennzeichnet, daß diese weiterhin eine Optik (38) aufweist, die den kollimierten Strahl auf die Detektoreinrichtung (40) fokussiert.

3. Vorrichtung nach Anspruch 2, dadurch gekennzeichnet, daß die fokussierende Optik eine Kollektorlinse (38) oder ein Parabolspiegel (114) ist.

4. Vorrichtung nach Anspruch 1, dadurch gekennzeichnet, daß die Konkav-Reflektoren (32) parabolisch oder sphärisch sind.

5. Vorrichtung nach Anspruch 1, dadurch gekennzeichnet, daß die Strahlendetektoreinrichtung (40) eine Vielzahl von Detektoren (52) aufweist, die so angeordnet sind, daß sie nacheinander die Strahlung vom gleichen Bildpunkt erfassen.

6. Vorrichtung nach Anspruch 1, dadurch gekennzeichnet, daß die Strahlendetektoreinrichtung (40) eine Vielzahl von in Reihen (54) angeordneten Detektoren aufweist, die gleichzeitig die Strahlung von verschiedenen linearen Abtastspuren erfassen.

7. Vorrichtung nach Anspruch 1, dadurch gekennzeichnet, daß die Strahlendetektoreinrichtung (40) so gewählt ist, daß sie sichtbares Licht, UV und Infrarotstrahlung erfassen kann.

8. Vorrichtung nach Anspruch 1, dadurch gekennzeichnet, daß die Strahlendetektoreinrichtung (40) eine Vielzahl von Detektoren aufweist, die auf die verschiedenen Strahlenbereiche ansprechen.

9. Vorrichtung nach den Ansprüchen 1 bis 8, dadurch gekennzeichnet, daß diese weiterhin einen Rahmenspiegel (20) enthält, der für die langsame vertikale Abtastung geeignet ist.

10. Vorrichtung nach Anspruch 9, dadurch gekennzeichnet, daß das Abbildungssystem (24) telezentrisch ist und zwischen dem Rahmenspiegel (20) und dem Bandspiegel (26) angeordnet ist, so daß die lineare Spur auf dem Bandspiegel (26) entsprechend der Position des Rahmenspiegels (20) erscheint.

11. Vorrichtung nach Anspruch 10, dadurch gekennzeichnet, daß das telezentrische Abbildungssystem eine Linse (91) oder ein Konkavspiegel (164) ist.

12. Vorrichtung nach Anspruch 11, dadurch gekennzeichnet, daß sie weiterhin eine vor dem Konkavspiegel (164) angeordnete konzentrische Meniskuslinse (162) enthält.

13. Vorrichtung nach den Ansprüchen 1 bis 12, dadurch gekennzeichnet, daß der Bandspiegel (26) ein Ausschnitt aus einer konischen Oberfläche (50) ist, oder ein Band aus reflektierendem Material (26), oder ein reflektierender Streifen (26) auf einem transparenten Material.

14. Vorrichtung nach Anspruch 9, dadurch gekennzeichnet, daß sie wenigstens eine reflektierende Oberfläche (93) zwischen der Reihe der Konkav-Reflektoren (81) und der fokussierenden Optik (99) zum Falten des optischen Strahls aufweist.

15. Vorrichtung nach Anspruch 14, dadurch gekennzeichnet, daß der optische Weg in Richtung auf den Rahmenspiegel (20) so ausgerichtet ist, daß er eine gerade Linie mit dem Strahlungsweg in Richtung auf die Strahlendetektoreinrichtung (40) bildet.

16. Vorrichtung nach Anspruch 9, dadurch gekennzeichnet, daß die Strahlendetektoreinrichtung auf einer gekühlten Oberfläche (174) montiert ist, und daß sie wieterhin gekrümmte Oberflächen (154, 156) benachbart zum Bandspiegel (152) aufweist, so daß die Detektoreinrichtung (40) der gekühlten Oberfläche (174) zugewendet ist.

17. Eine Rasterabtastvorrichtung zum Herstellen eines Videobildes mit parallelen, linearen Rasterabbildungselementen, dadurch gekennzeichnet, daß diese eine Abtastscheibe (110) aufweist, deren ebene Oberfläche mit Konkav-Reflektoren (108) in einer Kreisbahn besetzt ist; weiterhin einen Bandspiegel (124), der in einem der Brennweite der Konkav-Reflektoren (108) entsprechenden Abstand von den Konkav-Reflektoren (108) abgeordnet ist; Abbildungsoptiken (126, 129, 131) zum Abbilden des Bandspiegels (124) auf einer Abbildungsfläche; sowie die Strahlungsquelle (120), die Strahlen kontrollierter Intensität auf die Konkav-Reflektoren-Anordnung (108) richten und so ein Rasterbild aufbauen.

18. Vorrichtung nach Anspruch 17, dadurch gekennzeichnet, daß diese weiterhin eine Vorrichtung (122) aufweist, die die von der Strahlungsquelle (120) ausgesandte Strahlung kollimiert und auf die Konkav-Reflektor-Anordnung (108) ausrichtet.

## Revendications

1. Un système d'analyse dans lequel une scène est analysée suivant un motif orthogonal comprenant des traces linéaires d'analyse dans une des directions orthogonales, caractérisé en ce qu'il comprend un disque rotatif (10) comportant une rangée circulaire de réflecteurs concaves (32) sur une surface plane de ce disque; un miroir à bande (26), un moyen de formation d'image (24) produisant la trace d'analyse linéaire sur ledit miroir à bande, ladite trace d'analyse linéaire étant séparée desdits réflecteurs concaves (32) d'une distance égale à la distance focale desdits réflecteurs concaves (32); et un moyen de détection de rayonnement (40) positionné de façon à détecter l'intensité du rayonnement réfléchi par lesdits réflecteurs concaves (32).

2. Le système selon la revendication 1, caractérisé en ce qu'il est prévu un moyen (38) pour concentrer ledit faisceau collimaté sur ledit moyen de détection (40).

3. Le système selon la revendication 2, caractérisé en ce que ledit moyen de concentration est une lentille collectrice (38) ou un réflecteur parabolique (114).

4. Le système selon la revendication 1, caractérisé en ce que lesdits réflecteurs concaves (32) sont paraboliques ou sphériques.

5. Le système selon la revendication 1, caractérisé en ce que ledit moyen de détection de rayonnement (40) comprend des détecteurs multiples (52) positionnés de façon à détecter successivement un rayonnement provenant du même point de la scène en train d'être analysée.

6. Le système selon la revendication 1, caractérisé en ce que ledit moyen de détection de rayonnement (40) comprend une pluralité de détecteurs (52) positionnés dans des rangées (54) pour détecter simultanément un rayonnement provenant de traces linéaires différentes de la scène en train d'être analysée.

7. Le système selon la revendication 1, caractérisé en ce que ledit moyen de détection de rayonnement (40) est sélectionné parmi des détecteurs de lumière visible, de rayonnement infrarouge et de rayonnement ultraviolet.

8. Le système selon la revendication 1, caractérisé en ce que ledit moyen de détection de rayonnement (40) comprend une pluralité de détecteurs capables chacun de détecter un rayonnement dans un domaine spectral différent.

9. Le système selon les revendications 1 à 8, comprenant en outre un miroir de cadrage (20) pour effectuer une analyse verticale à basse vitesse de la scène.

10. Le système selon la revendication 9, caractérisé en ce que ledit moyen de formation d'image (24) est un système télécentrique et est placé entre ledit miroir de cadrage (20) et ledit miroir à bande (26) de telle sorte qu'une trace linéaire de ladite scène apparaisse sur ledit miroir à bande (26) en concordance avec la position du miroir de cadrage (20).

11. Le système selon la revendication 10, caractérisé en ce que ledit moyen télécentrique de formation d'image est une lentille (91) ou un miroir concave (164).

12. Le système selon la revendication 11, comprenant en outre une lentille à ménisque concentrique (162) placée avant ledit miroir concave de formation d'image.

13. Le système selon les revendications 1 à 12, caractérisé en ce que ledit miroir à bande est une section d'une surface conique (50), ou bien un ruban de matière réfléchissante (26), ou bien und bande réfléchissante (26) placée sur un substrat transparent.

14. Le système selon la revendication 9, comprenant au moins en outre une surface réfléchissante (93) entre ladite rangée de réflecteurs concaves (81) et ledit moyen de concentration (99) pour couder le trajet optique.

15. Le système selon la revendication 14, caractérisé en ce que le trajet optique dirigé vers le miroir de cadrage est aligné avec le trajet aboutissant audit moyen de détection de rayonnement.

16. Le système selon la revendication 9, caractérisé en ce que ledit moyen de détection est monté sur une surface refroidie et comprend en outre des surfaces incurvées (154, 156) adjacentes audit miroir à bande (152) de telle sorte que ledit moyen de détection (39) voie ladite surface refroidie dans des régions extérieures au balayage par l'intermédiaire dudit miroir à bande.

17. Un système d'analyse tramé pour produire une image du type vidéo faisant intervenir une analyse linéaire parallèle d'éléments de formation d'image, caractérisé en ce qu'il comprend un disque rotatif d'analyse (110) comportant une rangée circulaire de réflecteurs concaves (108) placés sur une surface plane de celui-ci; un miroir à bande (124) séparé desdits réflecteurs concaves (108) d'une distance égale à la distance focale desdits réflecteurs concaves (108), des moyens de formation d'images (126, 129, 131) pour former une image dudit miroir à bande (124) sur un plan-image; et un moyen d'émission de rayonnement (120) positionné de façon à émettre un rayonnement avec une intensité contrôlée en direction de ladite rangée de réflecteurs concaves (108) pour former une image d'analyse linéaire.

18. Le système selon la revendication 17, comprenant en outre un moyen (122) pour transformer un rayonnement provenant dudit moyen d'émission de rayonnement (120) en un faisceau collimaté dirigé vers ladite rangée de réflecteurs concaves (108).

FIG.1

0 123 038

FIG. 2a

FIG. 3

FIG. 4

FIG. 2 b

$R_D$

30

32

50

24

FIG. 5

52

54

FIG. 5a

60

62

64

FIG. 6 c

4

FIG. 6a

FIG. 6b

5

FIG. 7

FIG. 8

FIG. 9

FIG. 10

FIG. 11